# EUROPEAN PATENT APPLICATION

(11) **EP 3 422 745 A1**
(43) Date of publication of application: **02.01.2019**
(21) Application number: 17178993.6
(22) Date of filing: 30.06.2017
(51) Int. Cl.: H04W 4/00, G06F 9/44, H04L 29/08, G06F 9/50

(54) **CONTEXT HANDLING SYSTEM AND METHOD**

(71) Applicant: Nokia Solutions and Networks Oy, 02610 Espoo (FI)
(72) Inventor: ROELANDS, Marc, 2018 Antwerp (BE)
(74) Representative: D'Halleweyn, Nele Veerle Trees Gertrudis

(57) **Abstract**

A context handling system, the system comprising: a context model base storing at least one model defining at least one context status element based on at least one context element associated with at least one context sensor, a service template base storing a plurality of service templates, a service composition and implementation module configured for receiving a service request by a user, selecting a service template of the plurality of service templates based on the service requested, and implementing the selected service template in a service instance.

## Description

### FIELD OF INVENTION

The present invention relates to context engine implementations. Particular embodiments relates to a system, a method, and a computer program product for context handling.

### BACKGROUND

Context engines are in use today for location aware applications, smart contextual services in various enterprise applications including communication solutions (such as Lync or WebEx), as well as being the basis for the standard 3GPP IMS Presence Service and many instant/social messaging services on the internet. One challenging aspect for context engines, especially in carrier-scale settings (IMS as well as over-the-top solutions), is that the context engine is a scalability bottleneck and resilience-risk-implying central component by design. This has led to solutions applying advanced database techniques to this architectural component, such as in-memory database technology or sophisticated cashing/distribution mechanisms. Similarly, the same architectural paradigm is maintained in more general publish-subscribe systems, and is often also seen as a logical central component.

With today's trend to Internet-of-Things and cloud-based (distributed) service platforms, and the correspondingly expected emergence of a much wider range of, and at the same time more stream-intensive, context-aware services, this scalability and dependency issue with classical context engines is quickly becoming a critical problem. Hence there is a need for a more scalable solution to implement context handling.

### SUMMARY

The object of embodiments of the invention is to provide a more scalable system for handling context in applications.

According to a first aspect of the invention, there is provided a context handling system. The system comprises:
- a context model base storing at least one model defining at least one context status element based on at least one context element associated with at least one context sensor;
- a service template base storing a plurality of service templates, a service template thereof comprising at least one of the following:
   - a context sensor reference to the at least one context sensor;
   - a model reference to a model of the at least one model;
- a service composition and implementation module configured for:
   - receiving a service request by a user;
   - selecting a service template of the plurality of service templates based on the service requested;
   - implementing and deploying the selected service template in a service instance.

Embodiments of the invention are based *inter alia* on the insight that when a service is requested by a user, this service is based on a service template which gets instantiated in an execution environment. This is supported, *e.g.* in SIPS/SIMPLE, as a publish-subscribe protocol. In such a way, an implemented service will thus subscribe to context changes which it will receive as a stream of events from the central context engine; which might become overburdened by the increase in context sensors to be processed. To overcome this problem, there is a service composition and implementation module configured for receiving a service request by a user, selecting a service template of the plurality of service templates based on the service requested, and implementing the selected service template in a service instance. After receiving the service request by the user, the service composition and implementation module will look in a service template base. The service template base stores the plurality of service templates. The service template comprises at least one of a context sensor reference to at least one context sensor and/or a model reference to a model. The model is stored in a context model base and will define at least one context status element based on at least one context element associated with at least one context sensor. Since the implementing is done in a service instance and is exclusively relevant to the service requested, the context engine is decentralized to be part of the service instance. Additionally, the service instance may connect to the context sensors directly.

In other words, embodiments of the invention provide a fractioning of a context engine for implementing in service instances which allow for a more adapted system of handling context.

According to a preferred embodiment, the implementing comprises implementing at least one of the following:
- a context element sensing block for generating at least one context element using data from the at least one context sensor referenced in the context sensor reference of the selected service template;
- a context processing block for processing the at least one model included in the model reference of the selected service template to obtain at least one context status element; and
- wherein the context element sensing block and/or the context processing block are embedded in the service instance.

In this manner, the implementing is well structured in logic blocks according to the reference(s) of the selected service template.

According to an exemplary embodiment, the service instance further comprises a service logic block defining an action of the service request based on the generated at least one context element and/or based on the obtained at least one context status element.

In this way, the final logic block to execute the service requested is linked to the at least one context element generated and to the at least one model processed.

According to a preferred embodiment, the service composition and implementation module is further configured for:
- keeping a first register of the context element sensing block(s) implemented;
- keeping a second register of the context processing block(s) implemented;
- implementing a new service template using the first and the second register.

In this manner, a track is kept of the already implemented and instantiated logic blocks for a possible later reuse of these blocks during a new service instance implementation.

According to an exemplary embodiment, implementing the new service template using the first and the second register comprises:
- comparing the context sensor reference of the new service template with the first register and, if the first register contains a context element sensing block using the at least one referenced context sensor of the new service template, embedding an access in the implemented service instance to the at least one context element sensing block;
- comparing the model reference of the new service template with the second register and, if the second register contains a context processing block using the at least one referenced model of the new service template, embedding an access in the implemented service instance to the at least one context processing block.

In this way, an instantiated context element sensing block or an instantiated context processing block may be connected to a new service instance for reuse by keeping a first and a second register of the logic blocks instantiated and comparing them to the new selected service template. According to a preferred embodiment, the service composition and implementation module is configured to give at least two service instances access to a common context element sensing block.

In this manner, a context element sensing block is reused.

According to an exemplary embodiment, the service composition and implementation module is configured to give at least two service instances access to a common context processing block.

In this way, a context processing block is reused.

According to a preferred embodiment, the service composition and implementation module is configured to implement the context processing block as one of the following:
- a code block in a computer-executable format;
- a pre-processed logic block interpretable by the service instance.

In this manner, inclusion of the code corresponding to the model is made easier.

It will be understood by the skilled person that the features and advantages disclosed hereinabove with respect to embodiments of the system may also apply, *mutatis mutandis,* to embodiments of the method.

According to a further aspect of the invention, there is provided a computer program comprising computer-executable instructions to perform the method, when the program is run on at least one computer, according to any one of the steps of any one of the embodiments disclosed above.

It will be understood by the skilled person that the features and advantages disclosed hereinabove with respect to embodiments of the system mays also apply, *mutatis mutandis,* to embodiments of the computer program product.

### BRIEF DESCRIPTION OF THE FIGURES

This and other aspects of the present invention will now be described in more detail, with reference to the appended drawings showing a currently preferred embodiment of the invention. Like number refer to like features through the drawings.
Figure 1 illustrates schematically an exemplary embodiment of a context handling system according to the invention;
Figure 2 illustrates schematically a further exemplary embodiment of a service instance in a context handling system according to the invention;
Figure 3 illustrates schematically a further exemplary embodiment of a context handling system according to the invention;
Figure 4 is a flow chart illustrating an exemplary embodiment of a method for handling context according to the invention.

### DESCRIPTION OF EMBODIMENTS

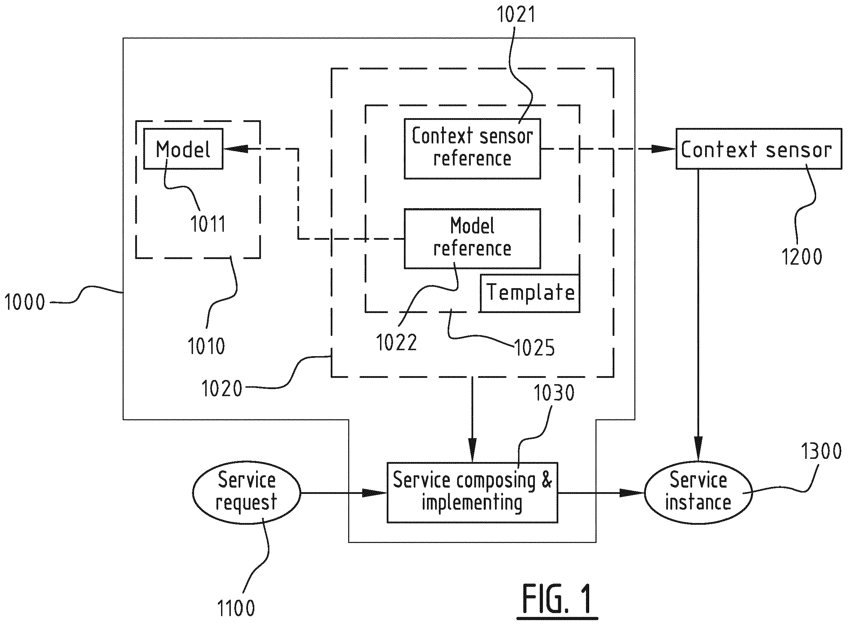

Figure 1 illustrates schematically an exemplary embodiment of a context handling system according to the present invention. The context handling system 1000 comprises a context model base 1010, a service template base 1020, and a service composition and implementation module 1030.

The context model base 1010 stores at least one model 1011. The at least one model 1011 defines at least one context status element based on at least at least one context element associated with the at least one context sensor 1200.

In the context of the present disclosure, the term "context" refers to any information that can be used to characterize the situation of an entity. The entity may be a person, a place, or an object that may be considered relevant to an interaction between a user and an application, including the user and applications themselves.

In the context of the present disclosure, the term "context element" refers to an element related to context, wherein the element may have predefined states. It may be e.g. the state of an object, e.g. a light bulb (on, off), the state of a person (e.g. sleeping, walking, etc.), the room temperature as a range of measurably different temperature readings, or a more complex element like the weather in a particular geo-location with a range of weather states associated. Context elements may be sensed by context sensors.

In the context of the present disclosure, the term "context model" refers to a representation of one or more rules expressing interdependencies of the states of context elements. Context statuses may be obtained by processing context models from context elements and/or context statuses.

The service template base stores a plurality of service templates 1025. A service template 1025 comprises a context sensor reference 1021 to the at least one context sensor 1200, and a model reference 1022 to the at least one model 1011.

The service composition and implementation module 1030 is configured for receiving the service request 1100 by a user. Based on the service requested, the service template 1025 is selected from the service template base 1020. Using the context sensor reference 1021 and the model reference 1022 the service composition and implementation module 1030 is configured for implementing a means to manage the context in the service instance 1300.

The service composition and implementation module 1030 is configured for receiving a service request 110, selecting a service template 1025 of the plurality of service templates 1025, implementing the selected service template 1025 in a service instance 1300. The service instance 1300 is executed according to an input provided from at least one context sensor 1200.

The context model 1011 may be a static representation of all relations and constraints that context elements have by themselves and among themselves. It may consist of an arbitrarily complex rule expressing how to derive the at least one context status based on the at least one context element. The template 1025 may comprise references 1021, 1022 at the relevant rules in the context model 1011 as well as at the relevant context sensors 1200. The service composition and implementation module 1030 may be configured to implement the service template 1025 according to several methods such as:
- a code block in a computer-executable format;
- a pre-processed logic block interpretable by the service instance 1300.

The context handling system 1000 may be used for applications existing for previous context engines systems, without the need to have a central execution of a context engine system. The applications may be applications reacting to a change in an object, a person, a user, nature, situation, phenomenon status (location, temperature, speed, activity,...) such as measured by context sensors 1200, e.g. in infrastructure, in personal computing devices, keyboards, cameras, etc. or generated from a set of context sensors 1200 inputs.

Note that such service examples may be implemented without the use of a context handling system and with manual deployment on an execution platform, as direct and complete service code including the context sensing. However, this is then not leveraging the resource reuse that both prior art embodiments and embodiments of the invention for context handling have, being a commonality between multiple services. Embodiments of the invention realize the best of both worlds: the code executed for a single service instance approximately corresponds to the code that would be programmed and deployed directly, making it equally scalable, without requiring central context calculation execution, but also allowing for context element calculation to be commonly reused among service instances.

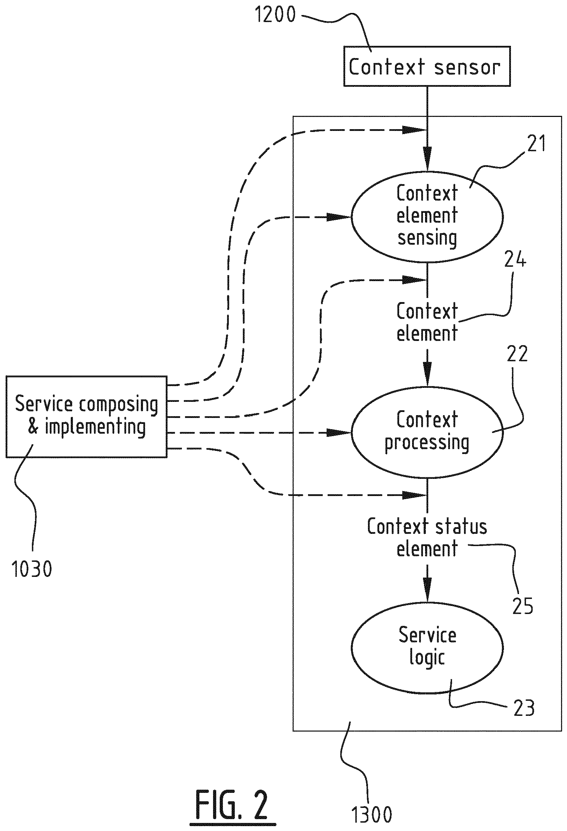

Figure 2 illustrates schematically a further exemplary embodiment of a context handling system according to the present invention. The service composition and implementation module 1030 is configured for implementing in the service instance 1300, and the service instance 1300 may have an input provided by the context sensor 1200. The service composition and implementation module 1030 is configured for implementing a context element sensing block 21 and a context processing block 22, and embedding them in the service instance 1300.

The service instance 1300 may comprise a service logic block 23 defining an action of the service request 1100 based on the generated at least one context element 24 and/or based on the obtained at least one context status element 25.

In an exemplary embodiment, there may be a service request 1100 to update a device when the device owner is sleeping. There may be a local time and a local light context sensor 1200. There may also be a model 1011 defining the "sleeping" status when the local time is between midnight and 4AM and when the light outside is below a certain intensity. Upon receiving the "updating when sleeping" service request 1100, the service composition and implementation module 1030 is configured for selecting the service template 1025 comprising the context sensor references 1021 to the local time sensor and the local light sensor, and the model reference 1011 defining the "sleeping" context status element 25. The service composition and implementation module is then configured for implementing a context element sensing block 21 for, in this particular case, generating the local time and the light intensity from the context sensors 1200, and adding these context elements 24 to the service instance 1300. The context elements 24 may be processed according to the referenced model 1011 by the implemented context processing block 22 such that the context status element 25 may be obtained. The service logic block 23 may be processed to update the device when the device owner is sleeping.

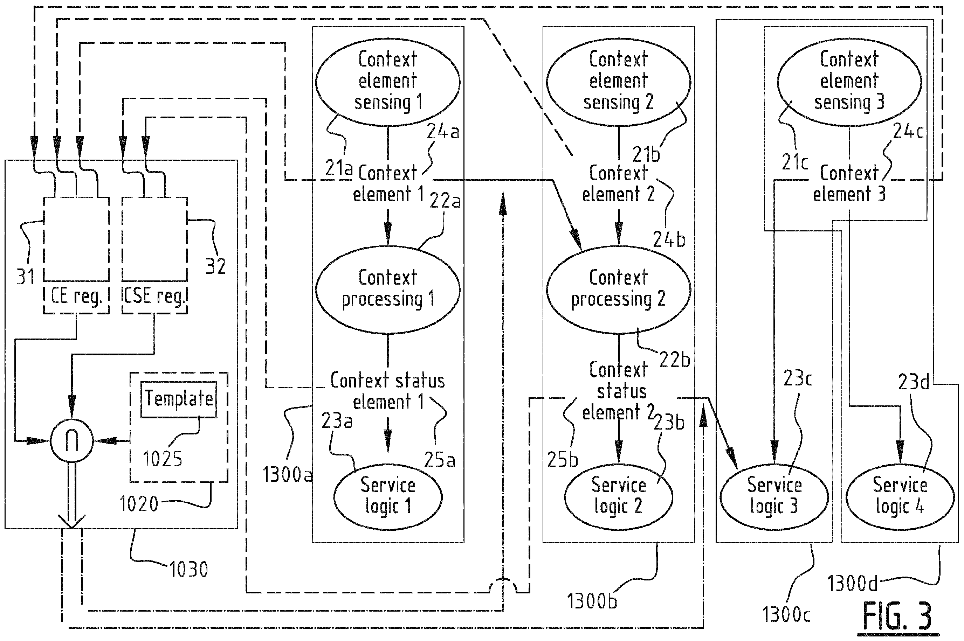

Figure 3 illustrates schematically a further embodiment of a context handling system according to the present invention. The service composition and implementation module 1030 is configured for implementing service instances 1300a, 1300b, 1300c, 1300d, in this particular alternative embodiment. The service composition and implementation module 1030 is configured for keeping a first register 31, and a second register 32.

The first implemented service instance 1300a comprises the first context element sensing block 21a, the first context processing block 22a, and the first service logic block 23a. The first context element 24a is generated by the first context element sensing block 21a. After the implementation of the first service instance 1300a, the first context element sensing block 21a may be contained in the first register 21a. Similarly, the first context status element 25a is obtained by the first context processing block 22a. After the implementation of the first service instance 1300a, the first context processing module 22a may be contained in the second register 32.

The second implemented service instance 1300b comprises the second context element sensing block 21b, the second context processing block 22b, and the second service logic block 23b. The second context element 24b is generated by the second context element sensing block 23b. After the implementation of the second service instance 1300b, the second context element sensing block 21b may be contained in the first register 31. The second context status element 25b is obtained by the second processing module 22b from the first 24a and the second context status element 24b. The new template 1025 selected to implement the second service instance 1300b may comprise the context sensor reference 1021 to the first context element sensor 1200. Since the first register 31 contains the first context element sensing block 21a corresponding to the context sensor 1200 referenced in the new template 1025, the service composition and implementation module 1030 may be configured to embed an access in the second service instance 1300b to the first context element sensing block 21 a. After the implementation of the second service instance 1300b, the second context processing block 22b may be contained in the second register 32.

The third implemented service instance 1300c comprises the third context element sensing block 21c, and the third service logic block 23c. The third context element 24c is generated by the third context element sensing block 21c. After the implementation of the third service instance 1300c, the third context element sensing block 24c may be contained in the first register 31. The new template 1025 selected to implement the third service instance 1300c may comprise the model reference 1022 used by the second context processing block 22b. Since the second register 32 contains the second context processing block 22b, the service composition and implementation module 1030 may be configured to embed an access in the third service instance 1300c to the second context processing block 22b.

The fourth implemented service instance 1300d comprises the fourth service logic block 23d. After comparing the new template 1025 selected to implement the fourth service instance 1300d with the first 31 and second register 32, the service composition and implementation module 1030 may embed an access to the third context element sensing block 21c. Thus, the service instance 1300 may be implemented without the context processing block 22.

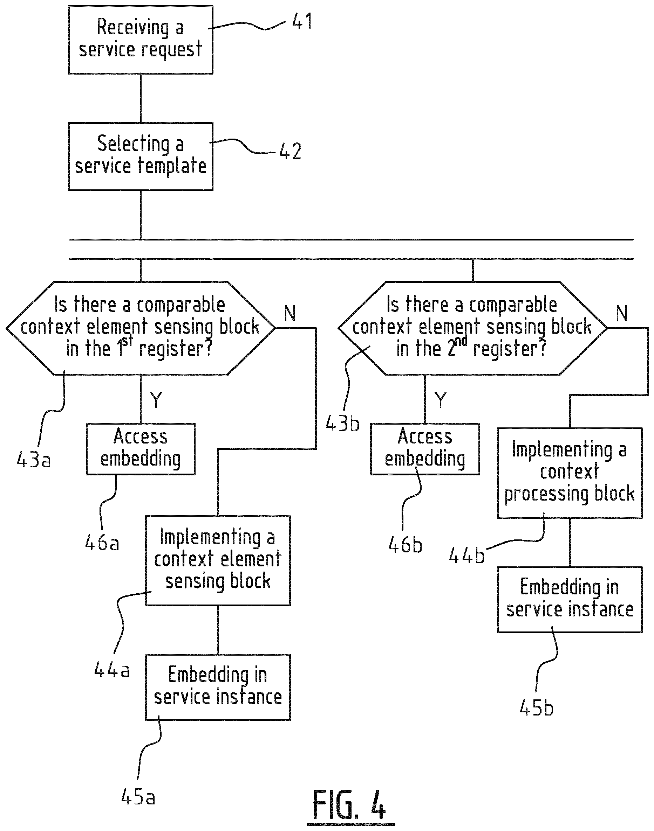

Figure 4 is a flow chart illustrating an exemplary embodiment of a method for handling context in services according to the present invention. The method comprises receiving a service request 41 from a user. Depending on the service request received 41, a service template may be selected 42 that corresponds to the requested service. The service template may be stored in a service template base and comprises references to at least one context sensor and/or at least one model. The service template may be implemented in a service instance.

The at least one context sensor reference may be compared 43a to context element sensing blocks contained in a first register and that may have been implemented. The at least one context model reference may be compared 43b to context processing blocks contained in a second register and that may have been implemented. If the first register contains a context element sensing block using the at least one referenced context sensor of the service template, an access may be embedded 46a in the service instance to the at least one context element sensing block. If the second register contains a context processing block using the at least one referenced context model of the service template, an access may be embedded 46b in the service instance to the at least one context processing block.

A context element sensing block may be implemented 44a for generating at least one context element using data from the at least one context sensor referenced in the context sensor reference of the selected service template. A context processing block may be implemented 44b for processing the at least one model included in the model reference of the selected service template to obtain at least one context status element. The at least one context element sensing block and/or at least one context processing block may then be embedded 45a, 45b in the service instance.
In another embodiment of the present invention, context modeling and context processing may not be part of a common execution engine, as may be assumed from prior art embodiments due to the historical reasons of this feature. In a preferred embodiment of the invention, there may be a method distinct from prior art embodiments leading to a more scalable solution. The context engine may be virtualized by means of the weaving of its actionable data processing parts into the service instance, exclusively as is relevant to these instances.

The context engine may be decomposed in its pre-execution and execution part. The context model may be known pre-execution, which may allow implementing the execution part relevant to the service requested together with the service instance. In this way, there may be no central run-time blocks containing both the context model and the context processing anymore. In other words, the service template, which may have been containing in prior art embodiments code for subscribing to a context element instance event stream, may contain a reference to the context element as to be looked up in the context model. Thus, implementing the service template may automatically imply the implementation of context element-associated code together with the service instance. It is to be noted that with embodiments of the method and the system of the invention, a register may still exist, preferably not of semantically-defined context element instances but more preferably of sensor instances. Any source of data may register, in an embodiment of the system according to the invention, as a sensor instance. Thus, a central element may remain, but a register may more easily be distributed, preferably not containing context element-related status processing.

Also, it is to be noted that the context element-associated code may contain the logic to query the register for the sensor instance needed as an input to the context element processing logic. Therefore it may be more scalable than prior art embodiments of the context engine; the query may resolve the address of the needed sensor(s) and the service may consequently connect to the sensor sources directly. This may occur at service start, *i.e*. right after or during the implementation of the service instance, or it may be a continuous process as part of the service execution, *e.g*. when a person moving around is tracked the used sensors may change during runtime.

## Claims

1. A context handling system comprising:
- a context model base storing at least one model defining at least one context status element based on at least one context element associated with at least one context sensor;
- a service template base storing a plurality of service templates, a service template thereof comprising at least one of the following:
- a context sensor reference to the at least one context sensor;
- a model reference to a model of the at least one model;
- a service composition and implementation module configured for:
- receiving a service request by a user;
- selecting a service template of the plurality of service templates based on the service requested;
- implementing the selected service template in a service instance.

2. The context handling system of claim 1, wherein the implementation comprises implementing at least one of the following:
- a context element sensing block for generating at least one context element using data from the at least one context sensor referenced in the context sensor reference of the selected service template;
- a context processing block for processing the at least one model included in the model reference of the selected service template to obtain at least one context status element; and
- wherein the context element sensing block and/or the context processing block are embedded in the service instance.

3. The context handling system of claim 2, wherein the service instance further comprises a service logic block defining an action of the service request based on the generated at least one context element and/or based on the obtained at least one context status element.

4. The context handling system of claim 2 or 3, wherein the service composition and implementation module is further configured for:
- keeping a first register of the context element sensing block(s) implemented;
- keeping a second register of the context processing block(s) implemented;
- implementing a new service template using the first and the second register.

5. The context handling system of claim 4, wherein implementing the new service template using the first and the second register comprises:
- comparing the context sensor reference of the new service template with the first register and, if the first register contains a context element sensing block using the at least one referenced context sensor of the new service template, embedding an access in the implemented service instance to the at least one context element sensing block;
- comparing the model reference of the new service template with the second register and, if the second register contains a context processing block using the at least one referenced model of the new service template, embedding an access in the implemented service instance to the at least one context processing block.

6. The context handling system of any one of the claims 2-5, wherein the service composition and implementation module is configured to give at least two service instances access to a common context element sensing block.

7. The context handling system of any one of the claims 2-6, wherein the service composition and implementation module is configured to give at least two service instances access to a common context processing block.

8. The context handling system of claim 2-7, wherein the service composition and implementation module is configured to implement the context processing block as one of the following:
- a code block in a computer-executable format;
- a pre-processed logic block interpretable by the service instance.

9. A method for handling context, the method comprising the following steps:
- storing in a context mode base at least one model defining at least one context status element based on at least one context element associated with at least one context sensor;
- storing in a service template base a plurality of service templates, wherein a service template thereof comprises at least one of the following:
- a context sensor reference to the at least one context sensor;
- a model reference to a model of the at least one model;
- receiving a service request by a user;
- selecting a service template of the plurality of service templates based on the service requested;
- implementing the selected service template in a service instance.

10. The method of claim 9, wherein the implementing of the selected service template comprises at least one of the following:
- implementing a context element sensing block for generating at least one context element using data from the at least one context sensor referenced in the context sensor reference of the selected service template;
- implementing a context processing block for processing the at least one model included in the model reference of the selected service template to obtain at least one context status element; and
- wherein the context element sensing block and/or the context processing block are embedded in the service instance.

11. The method of claim 10, further comprising:
- keeping a first register of the context element sensing block(s) implemented;
- keeping a second register of the context processing block(s) implemented;
- implementing a new service template using the first and the second register.

12. The method of claim 11, wherein the implementing of the new service template comprises:
- comparing the context sensor reference of the new service template with the first register and, if the first register contains a context element sensing block using the at least one referenced context sensor of the new service template, embedding an access in the implemented service instance to the at least one context element sensing block;
- comparing the model reference of the new service template with the second register and, if the second register contains a context processing block using the at least one referenced model of the new service template, embedding an access in the implemented service instance to the at least one context processing block.

13. The method of any one of the claims 10-12, wherein the implementing of the service template further comprises:
- giving at least two service instances access to a common context element sensing block.

14. The method of any one of the claims 10-13, wherein the implementing of the service template further comprises:
- giving at least two service instances access to a common context processing block.

15. A computer program product comprising computer-executable program instructions for performing, when executed on a computer, one or more steps of the method of any one of claims 9 to 14.
